# EUROPÄISCHE PATENTSCHRIFT

(11) **EP 1 678 545 B1**
(45) Veröffentlichungstag und Bekanntmachung des Hinweises auf die Patenterteilung: **01.04.2009**
(21) Anmeldenummer: 04787197.5
(22) Anmeldetag: 23.09.2004
(51) Int. Cl.: G02B 21/00

(54) **MIKROSKOP MIT EVANESZENTER PROBENBELEUCHTUNG**
MICROSCOPE WITH EVANESCENT SAMPLE ILLUMINATION
MICROSCOPE A ECLAIRAGE EVANESCENT DE L'ECHANTILLON

(30) Priorität: 25.09.2003 DE 10344410; 10.09.2004 DE 102004044307
(43) Veröffentlichungstag der Anmeldung: 12.07.2006
(73) Patentinhaber: Leica Microsystems CMS GmbH, 35578 Wetzlar (DE)
(72) Erfinder: ULRICH, Heinrich, 69121 Heidelberg (DE); KNEBEL, Werner, 76709 Kronau (DE); MÖLLMANN, Kyra, 67705 Trippstadt (DE); EUTENEUER, Peter, 35633 Lahnau (DE)
(74) Vertreter: Naumann, Ulrich
(86) Internationale Anmeldenummer: PCT/EP2004/052285
(87) Internationale Veröffentlichungsnummer: WO 2005/031428

(56) Entgegenhaltungen:
- DE-A- 10 039 520
- DE-A- 10 143 481
- US-A- 6 094 300
- CLAPP A R ET AL: "Three-dimensional optical trapping and evanescent wave light scattering for direct measurement of long range forces between a colloidal particle and a surface" REVIEW OF SCIENTIFIC INSTRUMENTS, AMERICAN INSTITUTE OF PHYSICS, US, Bd. 70, Nr. 6, Juni 1999 (1999-06), Seiten 2627-2636, XP012037483 ISSN: 0034-6748
- TOKUNAGA M ET AL: "SINGLE MOLECULE IMAGING OF FLUOROPHORES AND ENZYMATIC REACTIONS ACHIEVED BY OBJECTIVE-TYPE TOTAL INTERNAL REFLECTION FLUORESCENCE MICROSCOPY" BIOCHEMICAL AND BIOPHYSICAL RESEARCH COMMUNICATIONS, ACADEMIC PRESS INC. ORLANDO, FL, US, Bd. 235, 1997, Seiten 47-53, XP001086476 ISSN: 0006-291X
- ISHIJIMA A ET AL: "Single molecule nanobioscience" TIBS TRENDS IN BIOCHEMICAL SCIENCES, ELSEVIER PUBLICATION, CAMBRIDGE, EN, Bd. 26, Nr. 7, 1. Juli 2001 (2001-07-01), Seiten 438-444, XP004250536 ISSN: 0968-0004

## Beschreibung

Die Erfindung betrifft ein Mikroskop zur Erzeugung sowohl eines Beleuchtungslichtstrahlenbündels zur evaneszenten Beleuchtung einer Probe als auch eines Manipulationslichtstrahlenbündels zur optischen Manipulation der Probe.

Aus der US 2002/0097489 A1 ist ein Mikroskop mit evaneszenter Beleuchtung einer Probe bekannt. Das Mikroskop beinhaltet eine Weißlichtquelle, deren Licht über eine Schlitzblende durch das Mikroskopobjektiv hindurch in den eine Probe tragenden Objektträger zur evaneszenten Beleuchtung eingekoppelt wird. Das Beleuchtungslicht pflanzt sich in dem Objektträger durch totalinterne Reflektion fort, wobei die Beleuchtung der Probe nur im Bereich des aus dem Objektträger herausragenden evaneszenten Feldes erfolgt. Mikroskope dieser Art sind unter dem Begriff TIRFM (Total Internal Reflection Fluorescent Microscope) bekannt.

Die z-Auflösung von TIRF-Mikroskopen ist aufgrund des nur ca. 100 nm in die Probe ragenden evaneszenten Feldes außerordentlich gut.

Aus der DE 101 08 796 A1 ist ein hochaperturiges Objektiv, insbesondere für TIRF-Anwendungen, bekannt. Das Objektiv besteht aus einer ersten Linse mit einer positiven Brechkraft, einer zweiten Linse mit negativer Brechkraft, wobei das Brennweitenverhältnis zwischen den beiden Linsen im Bereich von - 0,4 und - 0,1 liegt und die Gesamtbrechkraft größer Null ist. Ferner beinhaltet das Objektiv zwei positive Linsen, deren Verhältnisdurchmesser zur Brennweite größer 0,3 und kleiner 0,6 ist. Ferner beinhaltet das Objektiv eine Negativlinse und eine Sammellinse, wobei die Negativlinse der Frontgruppe zugewandt ist und das Brennweitenverhältnis der Negativlinse und der Sammellinse zwischen - 0,5 und - 2 liegt.

Aus der DE 102 17 098 A1 ist eine Auflichtbeleuchtungsanordnung für die TIRF-Mikroskopie bekannt. Die Auflichtbeleuchtungsanordnung beinhaltet eine Beleuchtungsquelle, die im Betrieb ein polarisiertes Beleuchtungsstrahlenbündel abgibt, das unter einem Winkel zur optischen Achse propagiert und eine Umlenkeinrichtung, die das Beleuchtungsstrahlenbündel umlenkt und parallel zur optischen Achse in das Objektiv einkoppelt. Es ist bei dieser Auflichtbeleuchtungsanordnung vorgesehen, dass das von der Beleuchtungsquelle abgegebene Beleuchtungsstrahlenbündel s- und p-Polarisationsrichtungen mit einer Phasendifferenz aufweist und die Umlenkeinrichtung das Beleuchtungsstrahlenbündel x-mal reflektiert, wobei x = (n x 180° - d)/60°.

Aus der DE 101 43 481 A1 ist ein Mikroskop zur TIRM (Total Internal Reflection Microscopy) bekannt. Das Mikroskop weist ein Mikroskopgehäuse und ein Objektiv auf. Das von einer Beleuchtungseinrichtung ausgehende Beleuchtungslicht kann über einen in das Mikroskopgehäuse einschiebbaren Adapter eingekoppelt werden.

Aus der US 2004/0001253 A1 ist ein Mikroskop mit einem optischen Beleuchtungssystem, das ein einfaches Umschalten zwischen evaneszenter Beleuchtung und Reflektionsbeleuchtung ermöglicht. Das Beleuchtungssystem beinhaltet eine Laserlichtquelle, deren Licht in eine optische Faser eingekoppelt wird. Ferner ist eine Auskoppeloptik vorgesehen, die das aus der Faser austretende Licht in einen hinteren Brennpunkt des Mikroskopobjektivs fokussiert. Die optische Faser ist in einer Ebene senkrecht zur optischen Achse des Mikroskopobjektivs verschiebbar.

Aus der DE 102 29 935 A1 ist eine Einrichtung zur Einkopplung von Licht in einem Mikroskop bekannt. Dabei wird in der Leuchtfeldblendenebene durch eine als Schieber ausgeführte Lichtleitfaser-Einkopplung Laserlicht auf das Präparat gerichtet. Die Erfindung ist insbesondere für das TIRF-Verfahren geeignet.

In der Rastermikroskopie wird eine Probe mit einem Lichtstrahl beleuchtet, um das von der Probe emittierte Detektionslicht, als Reflexions- oder Fluoreszenzlicht, zu beobachten. Der Fokus eines Beleuchtungslichtstrahlenbündels wird mit Hilfe einer steuerbaren Strahlablenkeinrichtung, im Allgemeinen durch Verkippen zweier Spiegel, in einer Probenebene bewegt, wobei die Ablenkachsen meist senkrecht aufeinander stehen, so dass ein Spiegel in der x-, der andere in y-Richtung ablenkt. Die Verkippung der Spiegel wird beispielsweise mit Hilfe von Galvanometer-Stellelementen bewerkstelligt. Die Leistung des vom Objekt kommenden Detektionslichtes wird in Abhängigkeit von der Position des Abtaststrahles gemessen. Üblicherweise werden die Stellelemente mit Sensoren zur Ermittlung der aktuellen Spiegelstellung ausgerüstet. Speziell in der konfokalen Rastermikroskopie wird ein Objekt mit dem Fokus eines Lichtstrahls in drei Dimensionen abgetastet.

Ein konfokales Rastermikroskop umfasst im Allgemeinen eine Lichtquelle, eine Fokussieroptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird über einen Strahlteiler eingekoppelt. Das vom Objekt kommende Fluoreszenz- oder Reflexionslicht gelangt über die Strahiablenkeinrichtung zurück zum Strahlteiler, passiert diesen, um anschließend auf die Detektionsblende fokussiert zu werden, hinter der sich die Detektoren befinden. Diese Detektionsanordnung wird Descan-Anordnung gekannt. Detektionslicht, das nicht direkt aus der Fokusregion stammt, nimmt einen anderen Lichtweg und passiert die Detektionsblende nicht, so dass man eine Punktinformation erhält, die durch sequentielles Abtasten des Objekts mit dem Fokus des Beleuchtungslichtstrahlenbündels zu einem dreidimensionalen Bild führt. Meist wird ein dreidimensionales Bild durch schichtweise Bilddatennahme erzielt.

Aus der DE 100 39 520 A1 ist ein konfokales Rastermikroskop mit der Möglichkeit zur simultanen Manipulation und Objektdetektion bekannt. Auch bei diesem Rastermikroskop sind zwei Strahlablenkeinrichtungen - eine für den Manipulationslichtstrahl, eine für den Beleuchtungslichtstrahl - vorgesehen. In einer besonderen Ausgestaltungsvariante dieses Rastermikroskops erfolgt die Einkopplung des Manipulationslichtstrahls in den Strahlengang des Beleuchtungslichtstrahls durch den dem Beieuchtungslichtstrahl zugeordneten Ablenkspiegel hindurch. Der Ablenkspiegel ist dabei für Licht der Wellenlänge des Manipulationslichtstrahls transparent und für Licht der Wellenlänge des Beleuchtungslichtstrahls reflektieren ausgebildet.

Aus der US 6,094,300 ist ein Laserscanningmikroskop mit mindesten zwei Lichtquellen und zwei Strahlablenkeinrichtungen bekannt. Jeder der Lichtquellen ist einer Strahlablenkeinrichtung zugeordnet. Die von den Lichtquellen emittierten Laserlichtbündel können mit den beiden Strahlablenkeinrichtungen unabhängig voneinander die Probe abscannen.

Aus CLAPP A. R. ET AL "THREE-DIMENSIONAL OPTICAL TRAPPING AND EVANESCENT WAVE LIGHT SCATTERING FOR DIRECT MEASUREMENT OF LQNG RANGE FORCES BETWEEN A COLLQIDAL PARTICLE AND A SURFACE" ist für sich gesehen ein Mikroskop mit evaneszenter Probenbeleuchtung bekannt, bei dem eine Manipulationslichtbeleuchtung über eine Laserlichtquelle vorgesehen ist. Zur wahlweisen oder gleichzeitigen Fokussierung des Beleuchtungslichts zur evaneszenten Beleuchtung und des Manipulationslichts zur Manipulationslichtbeleuchtung ist ein besonderes Objektiv mit einstellbarem Fokus in Z-Richtung vorgesehen. Die Vorkehrung eines solchen Objektivs ist aufwendig und gestattet vor allem keine Anpassung an die jeweiligen Gegebenheiten sowie keine unmittelbare Beeinflussung des jeweiligen Beleuchtungslichts.

Aus TOKUNAGA M. ET AL "SINGLE MOLECULE IMAGING OF FLUOROPHORES AND ENZYMATIG REACTIONS ACHIEVED BY OBJECTIVE-TYPE TOTAL INTERNAL REFLECTION FLUORESCENCE MICROSCOPY" ist ein Mikroskop bekannt, bei dem zwischen Total-Interner-Reflebons-Fluoreszenz-Mikroskopie (TIRFM) und epi-Fluoreszenz-Mikroskopie durch laterale Bewegung eines Spiegels umgeschaltet werden kann.

Aus ISHIJIMA A. ET AL "SINGLE MOLECULE NANOBIOSCIENCE" ist für sich gesehen die Kombination von TIRFM mit Nanomanipulationsmethoden, nämlich am Beispiel einer optischen Pinzette, bekannt.

Der vorliegenden Erfindung liegt nun die Aufgabe zugrunde, ein Mikroskop anzugeben, welches sich bei einfachster Konstruktion sowohl zur evaneszenten Beleuchtung als auch zur optischen Manipulation einer Probe eignet.

Diese Aufgabe ist durch ein Mikroskop mit den Merkmalen des Patentanspruchs 1 gelöst. Danach handelt es sich um ein Mikroskop mit einem Mehrlinienlaser zur Erzeugung sowohl eines Beleuchtungslichtstrahlenbündels zur evaneszenten Beleuchtung einer Probe als auch eines Manipulationslichtstrahlenbündels zur optischen Manipulation der Probe, einem im Beleuchtungslichtstrahlengang angeordneten AOTF, einer dem AOTF nachgeordneten Strahlablenkeinrichtung, einer nach der Strahlablenkeinrichtung in den Beleuchtungslichtstrahlengang zur evaneszenten Probenbeleuchtung ein- und zur Probenmanipulation ausbringbaren Anpassungsoptik, mehreren optischen Elementen zur Strahlführung und Strahlformung, und einem Objektiv, dem ein Objektträger mit einer Probe nachgeordnet ist, wobei der AOTF zur Auswahl gewünschter Wellenlängen sowohl des Beleuchtungslichts als auch des Manipulationslichts dient, wobei die Anpassungsoptik gewährleistet, dass das Beleuchtungslichtstrahlenbündel in der Ebene der Objektivpupille einen Fokus aufweist und wobei die Strahlablenkeinrichtung über die Einstellung des Fokus des Beleuchtungslichtstrahlenbündels in der Ebene der Objektivpupille sowohl die Eindringtiefe des Beleuchtungslichts in die Probe als auch das Manipulationslicht zur Probenmanipulation steuert.

Die Vorrichtung zur optischen Manipulation der Probe umfasst eine einstellbare Strahlablenkeinrichtung. Die Strahlablenkeinrichtung beinhaltet in einer Ausgestaltungsvariante zumindest einen Galvanometerspiegel. Die Strahlablenkeinrichtung kann ein drehbares oder kippbares Prisma und/oder einen Kippspiegel und/oder ein Mikrospiegel und/oder ein akustooptisches Bauteil beinhalten.

Vorzugsweise umfasst die Vorrichtung zur optischen Manipulation der Probe eine Optik zur Strahlformung und/oder Strahlführung.

In einer ganz besonders bevorzugten Variante ist die Vorrichtung zur optischen Manipulation der Probe als Modul ausgebildet, das an ein Mikroskopstativ an- und abkoppelbar ist. In dieser Variante weist die Vorrichtung zur optischen Manipulation der Probe vorzugsweise ein Gehäuse mit einem Auskoppelport auf, der an einen Einkoppelport eines Mikroskops ankoppelbar ist. Dieses Modul ist vorzugsweise derart ausgebildet, dass eine Nachrüstung bereits bestehender Mikroskope ermöglicht ist. Dieses Modul ist vorzugsweise derart ausgebildet, dass eine Nachrüstung bereits bestehender Mikroskope ermöglicht ist.

Das Beleuchtungslichtstrahlenbündel weist im Bereich der Pupillenebene des Objektivs einen Fokus auf. Es ist erkannt worden, dass die Eindringtiefe eines evaneszenten Beleuchtungsfeldes in einer Probe von dem Winkel, unter dem die Totalreflektion an der Deckglasgrenzfläche bzw. an der Objektträgergrenzfläche stattfindet, abhängt. Dieser Winkel ist direkt korreliert mit dem Winkel relativ zur optischen Achse, unter dem das für die evaneszente Probenbeleuchtung vorgesehene Beleuchtungslichtstrahlenbündel das Objektiv durch die Frontlinse verlässt. Dieser Winkel wiederum hängt davon ab, mit weichem Abstand zur optischen Achse das Beleuchtungslichtstrahlenbündel durch die hintere Brennebene des Objektivs (Pupille) verläuft. Um ein weitgehend paralleles Beleuchtungslichtstrahlenbündel für die evaneszente Probenbeleuchtung zur Verfügung zu haben, muss das Beleuchtungslichtstrahlenbündel in der hinteren Brennebene des Objektivs einen Fokus aufweisen. Letztlich bestimmt der Abstand des Fokus zur optischen Achse des Objektivs die besagten Winkel und damit die Eindringtiefe des evaneszenten Feldes in die zu untersuchende Probe.

Der Abstand des Fokus des Beleuchtungslichtstrahlenbündels von der optischen Achse des Objektivs ist einstellbar, wobei der Abstand vorzugsweise mit der Strahlablenkeinrichtung und/oder der weiteren Strahlablenkeinrichtung einstellbar ist.

Das Manipulationslichtstrahlenbündel weist im Bereich der Probe einen Fokus auf.

Zur Erzeugung eines im Bereich der Pupillenebene positionierten Fokus des Beleuchtungslichtstrahlenbündels ist eine Anpassungsoptik in den Strahlengang des Mikroskops einbringbar, die zur Erzeugung eines Fokus des Manipulationslichtstrahlenbündels in den Strahlengang des Mikroskops einbringbar und zur Erzeugung eines Fokus des Beleuchtungslichtstrahlenbündels aus dem Strahlengang des Mikroskops entfernbar ist.

Die Anpassungsoptik ist im einfachsten Fall eine Linse bzw. eine Umlenkstrecke um die Linse herum, bestehend aus einigen (vorzugsweise vier) Umlenkspiegeln. Die Strahlablenkeinrichtung lenkt sowohl das Manipulationslichtstrahlenbündel als auch das Beleuchtungslichtstrahlenbündel ab.

Das Mikroskop umfasst vorzugsweise ein Rastermikroskop, insbesondere ein konfokales Rastermikroskop. Die Vorrichtung zur optischen Manipulation der Probe kann derart erweitert werden, dass sie als Konfokalscanner nutzbar ist. Zusätzlich können insbesondere ein dichroitischer Strahlteiler, Detektionspinhole und ein Detektor vorgesehen sein.

Vorzugsweise beinhaltet das erfindungsgemäße Mikroskop einen Detektor, der beispielsweise als Kamera ausgebildet sein kann.

Das erfindungsgemäße Mikroskop ist insbesondere zu FRAP-Untersuchungen (Fluorecence recovery after photobleaching) und/oder für FRET-Untersuchungen (Förster-Transfer) einer Probe geeignet. Das Manipulationslichtstrahlenbündel ist insbesondere zum Freisetzen eines Markers (Caged-Combound-Release) und/oder zum Bleichen und/oder zum Aktivieren eines Markers und/oder zur Mikrodissektion verwendbar.

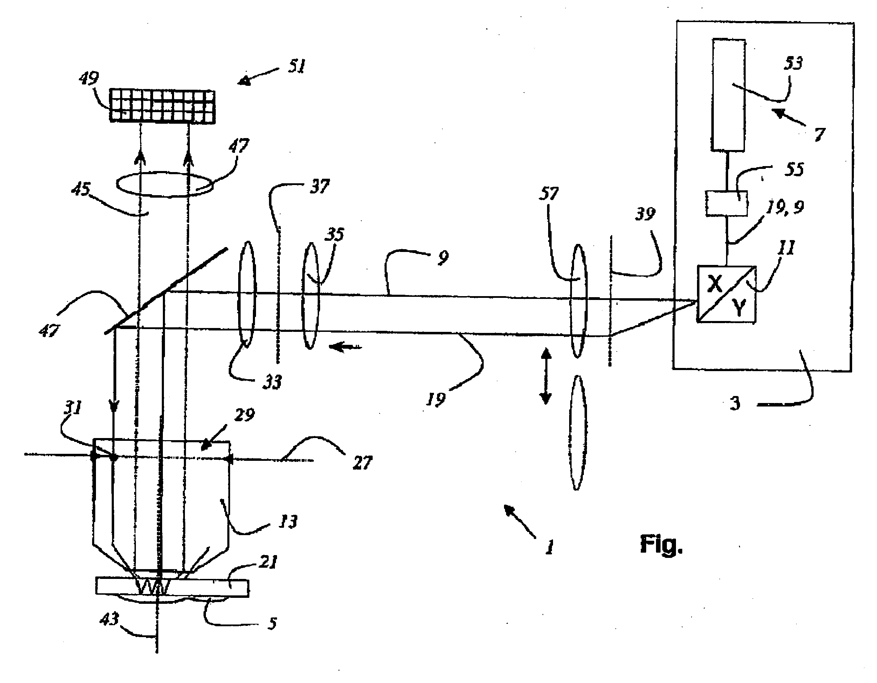

In der Zeichnung ist der Erfindungsgegenstand schematisch dargestellt und wird anhand der einzigen Figur nachfolgend beschrieben.

Die einzige Figur zeigt in einer schematischen Ansicht ein Ausführungsbeispiel eines erfindungsgemäßen Mikroskops.

Gemäß der Darstellung in der einzigen Figur umfasst ein erfindungsgemäßes Mikroskop eine optische Vorrichtung 3 zur Manipulation einer Probe 5. Die optische Vorrichtung 3 beinhaltet eine Lichtquelle 7, die ein Manipulationslichtstrahlenbündel 9 emittiert, und eine einstellbare Strahlablenkeinrichtung 11. Das Mikroskop 1 beinhaltet außerdem ein Objektiv 13.

Die Lichtquelle 7 dient außerdem zur Emission eines Beleuchtungslichtstrahlenbündels 19, nämlich zur evaneszenten Beleuchtung der Probe 5, die an einem Objektträger 21 angelagert ist.

Das Beleuchtungslichtstrahlenbündel 19 weist in der Ebene der Objektivpupille 29 einen durch einen Punkt 31 dargestellten Fokus auf, der in seiner Position innerhalb der Ebene 27 der Objektivpupille 29 mit Hilfe der Strahiablenkeinrichtung 11 variierbar ist.

Im Strahlengang des Mikroskops 1 sind mehrere optische Elemente zur Strahlführung und Strahlformung angeordnet. So beispielsweise eine erste Optik 33 und eine zweite Optik 35, wobei die Optiken 33, 35 eine Zwischenbildebene 37 erzeugen.

Das von der Probe 5 ausgehende Detektionslicht 45 gelangt durch das Objektiv 3 sowie durch den Strahlteiler 47, der das Beleuchtungslichtstrahlenbündel 19 zum Objektiv 3 lenkt, hindurch sowie durch die Tubusoptik 47 zu einem Detektor 49, der als CCD-Kamera 51 ausgebildet ist. Der Strahlteiler 47 ist als dichroitischer Strahlteiler ausgebildet und so ausgelegt, dass Licht der Wellenlänge des Beleuchtungslichtstrahlenbündels 19 reflektiert wird, während Licht der Wellenlänge des Detektorlichts 45 passieren kann.

Das in der einzigen Figur gezeigte Ausführungsbeispiel eines erfindungsgemäßen Mikroskops umfasst eine besondere optische Vorrichtung 3, die sowohl zur Manipulation der Probe 5 mittels Manipulationslichtstrahlenbündel 9 als auch zur Beleuchtung mittels Beleuchtungslichtstrahlenbündel 19 dient. Die Vorrichtung 3 zur Manipulation der Probe 5 beinhaltet die als Mehrlinienlaser 53 ausgebildete Lichtquelle 7, aus dessen Emissionslicht die Anteile der gewünschten Wellenlänge mit einem AOTF 55 auswählbar sind. Zur evaneszenten Beleuchtung der Probe 5 wird die Anpassungsoptik 57 in den Strahlengang des Mikroskops 1 eingebracht. Die Anpassungsoptik 57 gewährleistet, dass Beleuchtungslichtstrahlenbündel 19 in der Ebene 27 der Objektivpupille 29 einen durch einen Punkt dargestellten Fokus 31 aufweist. Zur Probenmanipulation wird die Anpassungsoptik 57 aus dem Strahlengang entfernt, damit das Manipulationslichtstrahlenbündel 9 in der Probe fokussiert ist. Mit der Strahlablenkeinrichtung 11 wird sowohl die Eindringtiefe des Beleuchtungslichtes in die Probe (über die Einstellung der Position des Fokus des Beleuchtungslichtstrahlenbündel 19 in der Ebene 27 der Objektivpupille 29), als auch die Probenmanipulation gesteuert.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

## Patentansprüche

1. Mikroskop mit einem Mehrlinienlaser (53) zur Erzeugung sowohl eines Beleuchtungsüchtstrahlenbündels (19) zur evaneszenten Beleuchtung einer Probe (5) als auch eines Manipulationslichtstrahlenbündels (9) zur optischen Manipulation der Probe (5), einem im Beleuchtungslichtstrahlengang angeordneten AOTF (55), einer dem AOTF nachgeordneten Strahlablenkeinrichtung (11), einer nach der Strahlablenkeinrichtung (11) in den Beleuchtungslichtstrahlengang zur evaneszenten Probenbeleuchtung ein- und zur Probenmanipulation ausbringbaren Anpassungsoptik (57), mehreren optischen Elementen zur Strahlführung und Strahlformung, und einem Objektiv (13), dem ein Objektträger mit einer Probe nachgeordnet ist,
wobei der AOTF zur Auswahl gewünschter Wellenlängen sowohl des Beleuchtungslichts als auch des Manipulationslichts dient,
wobei die eingebrachte Anpassungsoptik (57) gewährleistet, dass das Beleuchtungslichtstrahlenbündel (19) in der Ebene (27) der Objektivpupille (29) einen Fokus (31) aufweist und
wobei die Strahlablenkeinrichtung (11) bei eingebrachter Anpassungsoptik (57) über die Einstellung der Position des Fokus (31) des Beleuchtungslichtstrahlenbündels (19) in der Ebene (27) der Objektivpupille (29) die Eindringtiefe des Beleuchtungslichts in die Probe (5) und bei entfernter Anpassungsoptik (57) die Position des Fokus des Manipulationslichts in der Probe (5) steuert.

2. Mikroskop nach Anspruch 1, **dadurch gekennzeichnet, dass** die Strahlablenkeinrichtung (11) einen Galvanometerspiegel und/oder ein drehbares oder kippbares Prisma und/oder einen Kippspiegel und/oder Mikroskopspiegel und/oder ein akustooptisches Bauteil beinhaltet.

3. Mikroskop nach Anspruch 1 oder 2, **dadurch gekennzeichnet, dass** zur optischen Manipulation der Probe (5) eine Optik (33, 35) zur Strahlformung und/oder Strahlführung vorgesehen ist.

4. Mikroskop nach einem der Ansprüche 1 bis 3, **dadurch gekennzeichnet, dass** zur optischen Manipulation der Probe (5) ein Modul vorgesehen ist, das an ein Mikroskopstativ an- und abkoppelbar ist.

5. Mikroskop nach einem der Ansprüche 1 bis 4, **dadurch gekennzeichnet, dass** der Abstand des Fokus des Beleuchtungslichtstrahlenbündels (19) der optischen Achse (43) des Objektivs (13) einstellbar ist.

6. Mikroskop nach Anspruch 5, **dadurch gekennzeichnet, dass** der Abstand des Fokus des Beleuchtungslichtstrahlenbündels (19) von der optischen Achse (43) des Objektivs (13) mit der Strahlablenkeinrichtung (11) einstellbar ist.

7. Mikroskop nach einem der Ansprüche 1 bis 6, **dadurch gekennzeichnet, dass** das Mikroskop als Rastermikroskop, insbesondere als konfokales Rastermikroskop ausgeführt ist.

8. Mikroskop nach einem der Ansprüche 1 bis 7, **dadurch gekennzeichnet, dass** ein Detektor (49) - insbesondere eine Kamera (51) - vorgesehen ist.

9. Mikroskop nach einem der Ansprüche 1 bis 8, **dadurch gekennzeichnet, dass** das Manipulationslichtstrahlenbündel (9) zum Freisetzen eines Markers (Caged-Combound-Release) und/oder zum Bleichen und/oder zum Aktivieren eines Markers und/oder für FRAP-Untersuchungen (Fluorecence recovery after photobleaching) und/oder für FRET-Untersuchungen (Förster-Transfer) und/oder zur Mikrodissektion einsetzbar ist.

## Claims

1. Microscope having a multi-line laser (53) for generating both an illuminating light beam (19) for the evanescent illumination of a sample (5), and a manipulating light beam (9) for the optical manipulation of the sample (5), an AOTF (55) arranged in the illuminating beam path, a beam-deflector (11) arranged downstream of the AOTF, an adapting lens (57) which can be introduced into the illuminating beam path, downstream of the beam-deflector (11), for evanescent sample illumination and which can be removed therefrom for sample manipulation, several optical elements for beam-guiding and beam-shaping, and an objective (13) downstream of which an object holder with a sample is arranged,
wherein the AOTF is used to select desired wavelengths both of the illuminating light and of the manipulating light,
wherein the introduced adapting lens (57) ensures that the illuminating light beam (19) has a focus (31) in the plane (27) of the aperture diaphragm (29) and
wherein the beam-deflector (11), when the adapting lens (57) has been introduced, controls the depth of penetration of the illuminating light into the sample (5) by means of the adjustment of the position of the focus (31) of the illuminating light beam (19) in the plane (27) of the aperture diaphragm (29) and, when the adapting lens (57) has been removed, controls the position of the focus of the manipulating light in the sample (5).

2. Microscope according to claim 1, **characterised in that** the beam-deflector (11) contains a galvanometric mirror and/or a rotatable or tiltable prism and/or a tilting mirror and/or micro mirrors and/or an acousto-optic component.

3. Microscope according to claim 1 or 2, **characterised in that** an optical lens (33, 35) for beam-shaping and/or beam-guiding is provided for the optical manipulation of the sample (5).

4. Microscope according to any one of claims 1 to 3, **characterised in that** a module which can be coupled to and uncoupled from a microscope stand is provided for the optical manipulation of the sample (5).

5. Microscope according to any one of claims 1 to 4, **characterised in that** the distance of the focus of the illuminating light beam (19) from the optical axis (43) of the objective (13) is adjustable.

6. Microscope according to claim 5, **characterised in that** the distance of the focus of the illuminating light beam (19) from the optical axis (43) of the objective (13) is adjustable using the beam-deflector (11).

7. Microscope according to any one of claims 1 to 6, **characterised in that** the microscope is in the form of a scanning microscope, especially a confocal scanning microscope.

8. Microscope according to any one of claims 1 to 7, **characterised in that** a detector (49) - especially a camera (51) - is provided.

9. Microscope according to any one of claims to 8, **characterised in that** the manipulating light beam (9) can be used for releasing a marker (Caged-Compound-Release) and/or for bleaching and/or for activating a marker and/or for FRAP investigations (Fluorescence recovery after photobleaching) and/or for FRET investigations (Förster Transfer) and/or for microdissection.

## Revendications

1. Microscope comportant un laser multi ligne (53) pour générer aussi bien un faisceau de rayons lumineux d'éclairage (19) pour l'éclairage évanescent d'un échantillon (5) qu'un faisceau de rayons lumineux de manipulation (9) pour la manipulation optique de l'échantillon (5), un AOTF (55) disposé dans le faisceau de rayons lumineux de manipulation, un dispositif de déviation du faisceau (11) disposé après l'AOTF, une optique d'adaptation (57) pouvant être amenée et retirée, pour la manipulation de l'échantillon, après le dispositif de déviation du faisceau (11), sur le passage du faisceau de rayons lumineux d'éclairage pour l'éclairage évanescent d'un échantillon, plusieurs éléments optique pour le guidage et la formation du rayon et un objectif (13) à la suite duquel est disposé un support d'objet avec un échantillon.
l'AOTF servant à la sélection des longueurs d'onde souhaitées aussi bien de la lumière d'éclairage que de la lumière de manipulation,
l'optique d'adaptation (57) amenée permettant que le faisceau de rayons lumineux d'éclairage (19) présente un foyer dans le plan (27) de la pupille (29) de l'objectif et
le dispositif de déviation du faisceau (11), lorsque l'optique d'adaptation (57) a été amenée au-delà du réglage de la position du foyer (31) du faisceau de rayons lumineux d'éclairage (19) dans le plan (27) de la pupille (29) de l'objectif, commandant la profondeur de pénétration de la lumière d'éclairage dans l'échantillon et, lorsque l'optique d'adaptation (57)a été éloignée, la position du foyer de la lumière de manipulation dans l'échantillon.

2. Microscope selon la revendication 1, **caractérisé en ce que** le dispositif de déviation du faisceau (11) comporte un miroir de galvanomètre et/ou un prisme rotatif et/ou pivotant et/ou un miroir de microscope et/ou un composant acousto-optique.

3. Microscope selon la revendication 1 ou 2, **caractérisé en ce qu'**il est prévu, pour la manipulation optique de l'échantillon (5), une optique (33, 35) pour la formation et/ou le guidage du rayon.

4. Microscope selon l'une des revendications 1 à 3, **caractérisé en ce que**, pour la manipulation optique de l'échantillon (5), il est prévu un module qui peut être couplé à un pied du microscope et découplé.

5. Microscope selon l'une des revendications 1 à 4, **caractérisé en ce que** l'écart du foyer du faisceau de rayons lumineux d'éclairage (19) avec l'axe optique (43) de l'objectif (13) peut être réglé.

6. Microscope selon la revendication 5, **caractérisé en ce que** l'écart du foyer du faisceau de rayons lumineux d'éclairage (19) avec l'axe optique (43) de l'objectif (13) peut être réglé avec le dispositif de déviation du faisceau (11).

7. Microscope selon l'une des revendications 1 à 6, **caractérisé en ce que** le microscope est réalisé comme microscope à balayage.

8. Microscope selon l'une des revendications 1 à 7, **caractérisé en ce qu'**il est prévu un détecteur (49), notamment un appareil photographique (51).

9. Microscope selon l'une des revendications 1 à 8, **caractérisé en ce que** faisceau de rayons lumineux de manipulation (9) peut être enclenché pour libérer un marqueur (Caged-Combound-Release) et/ou pour blanchir et/ou activer un marqueur et/ou pour des tests FRAP (Fluorecence recovery after photobleaching) et/ou des tests FRET (Förster Transfer) et/ou une microdissection.
